(19) Europäisches Patentamt
European Patent Office
Office européen des brevets

(11) **EP 3 118 961 B1**

(12) **EUROPÄISCHE PATENTSCHRIFT**

(45) Veröffentlichungstag und Bekanntmachung des Hinweises auf die Patenterteilung:
**05.06.2019 Patentblatt 2019/23**

(51) Int Cl.:
***H02J 3/18*** *(2006.01)*

(21) Anmeldenummer: **15177208.4**

(22) Anmeldetag: **17.07.2015**

(54) **NUTZUNG ELEKTRISCHER NETZ-VERZERRUNGSENERGIE MITTELS GLEICHRICHTER**

USE OF ELECTRICAL NETWORK DISTORTION ENERGY USING RECTIFIER

UTILISATION D'UNE ENERGIE DE DISTORSION DE RESEAU ELECTRIQUE A L'AIDE D'UN REDRESSEUR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**18.01.2017 Patentblatt 2017/03**

(73) Patentinhaber: **"Condensator Dominit" Dr. Christian Dresel Gesellschaft für Leistungselektronik, Energietechnik und Netzqualität mbH 59929 Brilon (DE)**

(72) Erfinder: **Dresel, Christian, Dr.
59929 Brilon (DE)**

(74) Vertreter: **Götz, Georg Alois
Intellectual Property IP-GÖTZ
Patent- und Rechtsanwälte
Am Literaturhaus, Königstrasse 70
90402 Nürnberg (DE)**

(56) Entgegenhaltungen:
WO-A1-2012/025660    DE-T2- 60 031 158
US-A1- 2009 243 398    US-A1- 2013 328 397

**Beschreibung**

Die Erfindung betrifft ein Verfahren zur Aufnahme und Nutzung von elektrischer Störungs- und/oder Verzerrungsenergie, die aus einem Wechselstromnetz bezogen wird, welches insbesondere der öffentlichen bzw. allgemeinen Energieversorgung dient (siehe Oberbegriff des Anspruchs 1). Ferner betrifft die Erfindung die Verwendung eines Gleichrichters, der in aktiven Wechselstrom-Oberschwingungsfiltern einsetzbar ist und dazu einen Wechselrichter mit angeschaltetem Gleichspannungskreis mit Speicherkondensator oder sonstigem Energiespeicher aufweist. Zur Herbeiführung eines bidirektionalen Strom- und/oder Energieflusses ist der Wechselrichter von einer Steuerungs- und/oder Regelungseinrichtung angesteuert oder ansteuerbar..

In der Fachwelt (vgl. Große-Gehling u. a. "Blindleistungskompensation - Netzqualität" VDE-Verlag 2009, S.130) versteht man unter aktiven Netzfiltern Stromquellen, die auf Wechselrichter-Technologie basieren. Sie liefern den vom Verbraucher bezogenen Oberschwingungsstrom, so dass im Idealfall aus dem Energieversorgungsnetz nur noch der Grundschwingungsstrom bezogen wird. Mittels des Wechselrichters erfolgt eine Modulation des Filterstroms, wobei der Energiespeicher, beispielsweise ein oder mehrere Kondensatoren, geladen wird und eine Gleichspannungsquelle bildet.

Beispielsweise in WO 03/026094 A1 ist ein aktives Filter für ein dreiphasiges Wechselstromnetz beschrieben, um dortige Störungen zu reduzieren. Für jede Netzspannungs- oder Stromphase ist eine Transistorbrücke vorgesehen, die zwischen der jeweiligen Phase und einem Gleichspannungskreis geschaltet ist. Ferner ist das Aktivfilter mit einem Steuerungssystem versehen, mittels welchem die Transistorbrücken zum Reversieren des Stromflusses im Gleichspannungskreis angesteuert werden.

In WO 2013/077801 wird ein Aktivfilter zur Resonanz-Reduktion in Wechselstromnetzen zur Energieverteilung beschrieben. Dabei wird auf der Basis einer Spannungsmessung ein Kompensationsstrom zur Reduzierung der Resonanz mit einem Wechselrichter erzeugt.

In dem Firmenprospekt "ISUVOC 100+" der Firma Ing. Max FUSS, D - 12489 Berlin wird ein spannungsgeregeltes Aktivfilter zur Neutralisation von Netzstörungen angeboten, wobei als ein Effekt die Zurückspeisung der absorbierten Energie in das Netz genannt wird. Einzelheiten zu diesem Effekt sind nicht beschrieben.

Aus WO 2012/025660 A1 ist ein aktives Filter für elektrische Energieversorgungsnetze bekannt. Mit diesem Filter sollen Stromverzerrungen im Versorgungsnetz kompensiert werden. Der Kompensationsstrom wird mithilfe einer Steuereinheit auf der Basis eines gemessenen Laststromes bestimmt. Es wird die Energie vom Versorgungsnetz in einen Speicher-Kondensator übertragen und dann wird wieder Energie von diesem Speicherkondensator in das Versorgungsnetz zurückgespeist, wobei der Kompensationsstrom erzeugt wird. Dadurch sollen Oberschwingungen bis zur 50. Harmonischen der Grundschwingung im Versorgungsnetz kompensiert werden. Als Betriebsmodi ist das Unterdrücken vorbestimmter harmonischer Rauschkomponenten, das Unterdrücken aller harmonischer Rauschkomponenten und/oder die Kompensation von Blindleistung genannt.

Die wissenschaftliche Veröffentlichung von Ryckaert et. all "Adding Damping in Power Distribution Systems by means of Power Electronic Converters" (EPE Dresden, 2005, ISBN: 90-75815-08-5) setzt sich mit der Möglichkeit zur Gewinnung von Wirkenergie aus Verzerrungsenergie mittels Filtern oder, anstatt der Gewinnung von Wirkenergie, mit der Kompensation von internen Schaltverlusten auseinander. Zwar wird das Potenzial erkannt, harmonische Wirkleistung in Grundschwingungsleistung umwandeln zu können, jedoch ist keine Umsetzung beschrieben, wie zurückgewonnene Verzerrungsenergie gemessen und gegebenenfalls zurückgespeist werden kann. Des Weiteren ist nicht offenbart, inwiefern der beschriebene experimentelle Aufbau die Verluste, die durch die Verzerrungsenergie verursacht werden, ausgleichen kann. Hauptaugenmerk der wissenschaftlichen Veröffentlichung liegt in der Dämpfung von Oberschwingungen.

Es stellt sich die der Erfindung zu Grunde liegende Aufgabe, einen Realisierungsweg für ein Verfahren zur Nutzung von aus einem Wechselstromnetz bezogener Störungs- und/oder Verzerrungsenergie zu schaffen. Zur Lösung wird auf das im Anspruch 1 angegebene Verfahren, und auf die im Anspruch 5 angegebene Verwendungsweise eines bestimmten Gleichrichtertyps verwiesen. Optionale, vorteilhafte Ausgestaltungen der Erfindung ergeben sich aus den abhängigen Ansprüchen.

Erfindungsgemäß wird also aus dem Wechselstromnetz Störungs- und/oder Verzerrungsenergie gleichsam abgesaugt, in elektrische Wirkenergie umgewandelt und an ein oder mehrere Elektroenergiesysteme weitergegeben, beispielsweise in das Wechselstromnetz zurück gespeist. Es handelt sich um eine aktive Netz-Filterung, die nicht mit Blindleistung, sondern mit Wirkleistung arbeitet.

Das erfindungsgemäße Verfahren beinhaltet eine aktive Filtermaßnahme, mittels welcher der Energieinhalt von Verzerrungen, insbesondere Spannungsverzerrungen, im Wechselstromnetz in verfügbare (Wirk-) Energie umgewandelt wird. So lässt sich eine Recyclinganlage für elektromagnetische Verunreinigungen im Wechselstromnetz schaffen. Anders als bei passiven Filtern wird in Störungen oder Verzerrungen des Wechselstromnetzes enthaltene Wirkenergie nicht in Wärme umgesetzt, sondern einem oder mehreren Elektroenergiesystemen, beispielsweise dem 50 Hz-Energieversorgungsnetz, zur Verfügung gestellt. Jedwede Spannungsverzerrung wird erfasst, egal, ob diese periodisch ist oder ob es sich um ein Einzelereignis handelt. Neben dem Recycling von Störungs- und/oder Verzerrungsenergie lässt sich mit der Erfindung auch der vorteilhafte Effekt einer Beseitigung von Netzresonanzen erzielen, da in dem erfindungsgemäßen Verfahren auch dämpfende Maßnahmen auf Wirkleistungsbasis für das Wechselstromnetz enthalten sind.

Gemäß Erfindung werden ein oder mehrere Meßsignale oder Messdaten von einer oder mehreren elektrischen Spannungen des Wechselstromnetzes, beispielsweise von den drei Phasen-Spannungen eines dreiphasigen Wechselstromnetzes, ermittelt. Aus den Meßdaten oder Meßsignalen lässt sich mittels bereits verfügbarer Software eine erste Signalkomponente mit Signalanteilen entsprechend der Grundschwingung bzw. der idealen Sinusschwingung des Wechselstromnetzes und eine zweite Signalkomponente herausfiltern, welche alle die Signalanteile enthält, die noch übrig sind bzw. vom idealen Grundschwingungs-Sinus abweichen und somit die im Wechselstromnetz enthaltenen Störungen und Verzerrungen repräsentieren.

Gemäß Erfindung wird der Energiespeicher mit einem Strom aus dem Wechselstromnetz geladen, der proportional oder direkt proportional zur zweiten Signalkomponente bzw. zu den Signalanteilen ist, die vom idealen Grundschwingungs-Sinus des Wechselstromnetzes abweichen. Demnach wird gemäß Erfindung gleichsam ein ohmscher Widerstand für die Netzstörungen oder - verzerrungen simuliert. Gleichzeitig ist sichergestellt, dass der Energiespeicher nur mit Störungs- und/oder Verzerrungsenergie geladen wird. Die so "aufgesammelte" bzw. "aufgekehrte" Energie lässt sich zur Wiederverwendung bzw. zum Recyceln bereithalten.

Gemäß einer vorteilhaften Erfindungsausbildung umfasst die Umwandlung in Wirkenergie ein den (vorher geladenen) Energiespeicher entladendes Einspeisen eines Stromes in das Wechselstromnetz und/oder das sonstige Elektroenergiesystem, wobei die Strom-Momentanwerte proportional oder direkt proportional zu einer Grundschwingungsspannung des Wechselstromnetzes oder des sonstigen Elektroenergiesystems sind. Zumindest entspricht der eingespeiste Strom in Betrag und Phase der Grundschwingungsspannung oder korreliert damit. Aus dem Wechselstromnetz "gesaugte" bzw. entnommene Verzerrungs- und/oder Störungsenergie wird also zwischengespeichert und dann, geordnet oder strukturiert entsprechend der Grundschwingung des jeweiligen Elektroenergiesystems, insbesondere des Wechselstromnetzes selbst, in das Elektroenergiesystem bzw. das Wechselstromnetz weitergegeben bzw. zurückgespeist. Die Stromentladung aus dem Energiespeicher erfolgt erfindungsgemäß proportional oder direkt proportional zur ersten Signalkomponente, d.h. zur vorzugsweise idealen (Sinus-) Grundschwingung des Wechselstromnetzes oder des zu versorgenden Elektroenergiesystems.

Aus der oben beschriebenen erfindungsgemäßen Verfahrensweise resultiert ein Konzept für ein aktives Netzfiltergerät, das sich bezogen auf Verzerrungen und Störungen im Netz wie eine ohmsche Last verhält, bezüglich dessen Grundschwingung jedoch wie eine Stromquelle. Dabei lassen sich mit der Erfindung im Netz vorhandene Störenergien in Wirkenergie umsetzen (recyceln). Anhand der oben angesprochenen Spannungs-Meßdaten lässt sich mittels bereits verfügbarer Software der reale Spannungsverlauf im Netz in einen idealen, sinusförmigen Spannungsverlauf und einen die Störungen und Verzerrungen reflektierenden Spannungsverlauf aufspalten. Auf der Basis des berechneten, idealen Spannungsverlaufs kann die aufgenommene und zwischengespeicherte Verzerrungs- und/oder Störungsenergie als Energiestrom proportional zu oder entsprechend der Grundschwingung strukturiert und zurückgespeist oder an ein anderes Elektroenergiesystem weitergegeben werden.

Eine erfindungsgemäße Verfahrensvariante besteht darin, das Laden mit Zwischenspeichern und Entladen in den bzw. aus dem Energiespeicher mit dem jeweiligen Strom voneinander entkoppelt und/oder gleichzeitig und/oder zumindest innerhalb einer Periode der Grundschwingung des Wechselstromnetzes durchzuführen. Dies lässt sich besonders zweckmäßig mit an sich bekannten, aktiven Netzfiltern oder Gleichrichtern verwirklichen, deren Kernstück ein mit ansteuerbaren Leistungsschaltern realisierter Wechselrichter bildet. Dieser kann bidirektional bzw. in beide Richtungen gleichzeitig betrieben werden, d.h. simultan sowohl im Sinne eines Aufladens als auch Entladens des nachgeschalteten Speicherkondensators oder sonstigen Energiespeichers. Zur Herbeiführung der Entkopplung des Lade- und Entladeprozesses ist die oben angesprochene Aufspaltung der Spannungs-Messergebnisse in die ideale Netz-Sinusschwingung (erste Signalkomponente) und die verbleibenden Signalanteile (Störungen, Verzerrungen) als zweite Signalkomponente, was bereits eine mathematische Entkopplung darstellt, besonders zweckdienlich. Die Entkopplung lässt sich dann mithilfe der entsprechend der mathematischen Methode zur Aufspaltung angesteuerten Leistungsschalter des Wechselrichters im Sinne eines virtuell gleichzeitigen Ladens und Entladens der Energiespeichereinrichtung umsetzen.

In der Praxis werden die Lade- und Entladeprozesse mit jeweiliger Energieaufnahme und -einspeisung zumindest innerhalb einer Periode der Grundschwingung bzw. einer Netzperiode des Wechselstromnetzes, beispielsweise innerhalb von 20 ms bei 50 Hz Grundschwingung, durchgeführt. Nach Ablauf einer Netzperiode ist die Speichereinrichtung, beispielsweise der Kondensator eines Zwischen- oder Gleichspannungskreises, wieder in dem selben Ladezustand wie zu Beginn der Netzperiode, beispielsweise 20 ms vorher. Nach Ablauf der Grundschwingungs- bzw. Netzperiode, beispielsweise nach 20 ms, hat der Energiespeicher, beispielsweise der Kondensator, genauso viel Energie aufgenommen wie er an Energie mit Wirkleistung enthaltendem Filterstrom eingeprägt hat, beispielsweise zurück in das Wechselstromnetz oder anderweitig in ein Elektroenergiesystem.

Gemäß einer weiteren erfindungsgemäßen Verfahrensvariante wird die Aufspaltung in die erste und die zweite Signalkomponente unter Einbeziehung von Vergangenheitsdaten durchgeführt, welche früher aufgenommene Meßsignale oder Messdaten über die Wechselstrom-Netzspannung umfassen. Daraus wird eine Zielvorgabe für die erste Signalkomponente bzw. den vorzugsweise ideal sinusförmigen Spannungsverlauf im Wechselstromnetz gebildet. Die Vergangenheitsdaten beinhalten also früher gemessene Werte aus einer permanenten Beobachtung bzw. Verfolgung der Netzspannung (bei einem dreiphasigen Netz beispielsweise zwischen der ersten und der zweiten Phase), woraus eine Sollspannung bzw. Führungsgröße als Zielvorgabe konstruiert werden kann.

Im Rahmen der Erfindung liegt auch die Verwendung eines an sich bekannten Gleichrichters, der in aktiven Wechselstrom-Oberschwingungs-Filtern (siehe eingangsgenanntes Fachbuch) einsetzbar ist und sich insbesondere zur Durchführung der gerade erläuterten Verfahrensweisen nach der Erfindung eignet. Ein derartiger, aktiver Gleichrichter lässt sich gemäß Erfindung zur Aufnahme und Nutzung der im Wechselstromnetz vorhandenen, elektrischen Störungs- und/oder Verzerrungsenergie einsetzen. Insbesondere lässt sich diese Energie bei entsprechender Steuerung des Gleichrichters ganz oder teilweise aus dem Wechselstromnetz in den Energiespeicher (realisiert beispielsweise als "Zwischenkreis" mit einem Speicherkondensator) aufnehmen. Ferner lässt sich diese Energie unter Umwandlung in elektrische Wirkenergie in ein oder mehrere Elektroenergie-Systeme, insbesondere in das Quell-Wechselstromnetz selbst, (zurück-) speisen bzw. dort einprägen. Dabei wird vorteilhaft die Fähigkeit aktiver Gleichrichter bzw. Wechselrichter ausgenutzt, über entsprechende Ansteuerung ihrer Leistungsschalter durch eine Steuerungs- und/oder Regeleinheit im Rahmen üblicher leistungselektronischer Anforderungen beliebige Stromsignale und -modulationen mit vorspezifizierten Schaltmustern bidirektional, insbesondere mit bidirektionalem Energiefluss, erzeugen zu können.

Eine vorteilhafte Ausbildung der erfindungsgemäßen Verwendungsweise besteht darin, eine in dem aufgenommenen Strom und/oder im Energiespeicher enthaltene Verzerrungsenergie teilweise zur Stromversorgung und/oder zum Betrieb der Steuerungs- und/oder Regelungseinrichtung, des Wechselrichters und/oder der Energiespeicherquelle einzusetzen, und die noch verbleibende oder verbliebene, aufgenommene Verzerrungsenergie in das oder die Elektroenergiesysteme einzuspeisen, ohne dass dem Gleichrichter nebst seiner Steuerungs- und/oder Regelungseinrichtung von extern Strom oder Energie zugeführt wird. Der Gleichrichter wird zur Versorgung technischer Komponenten, Einrichtungen oder Geräte mit elektrischem Strom oder elektrischer Energie eingesetzt, welche ausschließlich aus der erfindungsgemäß entnommenen Verzerrungsleistung abgeleitet ist. Dies ließe sich konkret beispielsweise dadurch realisieren, dass die Energie für die Steuerungs- und/oder Regelungseinrichtung, Wechselrichter und weitere Komponenten des Systems direkt aus dem Speicherkondensator oder sonstigem Energiespeicher (in einem etwaigen Zwischen- bzw. Gleichspannungskreis) entnommen wird. Hierzu können sogenannte DC/DC-Wandler eingesetzt werden, welche die Gleichspannung des Energiespeichers bzw. Zwischenkreises abgreifen und in eine andere, beispielsweise für die Regel- und/oder Steuerungseinrichtung geeignete Gleichspannung umwandeln.

Bei dieser Ausbildung ist es denkbar, dass der entsprechend verwendete bzw. betriebene Gleichrichter ohne externe Strom- bzw. Energieversorgung auskommt. Nimmt er gemäß dem erfindungsgemäßen Verfahren beispielsweise 1000 W Störenergie in seinen Energiespeicher auf, verbraucht aber davon nur noch 500 W bis 600 W für den Eigenbetrieb, dann lassen sich noch mindestens 40 % von der aufgenommenen Störenergie in Form von verwertbarer Wirkenergie in das Wechselstromnetz oder ein sonstiges Elektroenergiesystem zurückspeisen bzw. einprägen. Der Energie-Eigenverbrauch des Gleichrichters lässt sich bei den heutzutage für leistungselektronische Anwendungen zur Verfügung stehenden Hardware-Komponenten bzw. deren üblichen Verlustleistungen ausreichend niedrig halten. Da die Taktrate von Prozessoren, die heutzutage für den Einsatz in der Steuerungs- und/oder Regelungseinrichtung auf dem Markt gängig sind, im Mikrosekunden-Bereich liegt, lässt sich ein entsprechender Steuerungs- und/oder Regelalgorithmus leicht innerhalb der notwendigen Zeit, d.h. innerhalb einer Netzperiode abarbeiten. "Schnelle" Prozessoren mit entsprechend hohen Verlustleistungen müssen nicht eingesetzt werden. In dieser Zeitspanne kann ein marktgängiger Prozessor ohne besonders hohe Rechengeschwindigkeit das, was gemessen wurde (bezüglich Netzspannungen), rechtzeitig und ohne besonders hohe Auslastung in eine Ansteuerung für den Wechselrichter umrechnen, aus der ein entsprechend der Grundschwingung des Netzes strukturierter Stromfluss resultiert.

Bei der Verwendung des Gleichrichters auf der Basis der erfindungsgemäßen Verfahrensweise ergibt sich der Vorteil, dass die Notwendigkeit von Strommessungen entfällt. Eine Aufnahme oder Zuführung von Meßsignalen eines oder mehrerer Ströme des Wechselstromnetzes an die dem Wechselrichter zugeordnete Steuerungs- und/oder Regelungseinrichtung lässt sich bei einer optionalen Erfindungsausbildung ausschließen.

Eine optionale Weiterbildung besteht darin, den erfindungsgemäß verwendeten Gleichrichter als Eingangsgleichrichter in Stromversorgungen maschineller Vorrichtungen insbesondere aus dem Bereich des Maschinenbaus oder für Frequenzumrichter elektrischer Antriebe oder als Eingangsgleichrichter für eine oder mehrere Einrichtungen zur Sicherung und Förderung der Qualität des Wechselstromnetzes anzuordnen.

In Anlagen zur Übertragung und Verteilung elektrischer Energie werden leistungselektronische Durchgangssysteme eingesetzt, um die Versorgungssicherheit mit elektrischer Energie abzusichern (unterbrechungsfreie Stromversorgung - USV) und die Spannungsqualität zu beeinflussen (aktive Serienfilter, dynamische Spannungsregler, DVR - Dynamic Voltage Restorer). Bei DVR, AVC (Active Voltage Conditioner) und aktiven Spannungsreglern geht es darum, Spannungseinbrüche (Voltage Sags) auszuregeln, um hauptsächlich, aber nicht ausschließlich industrielle Verbraucher zu schützen. Allgemein kennzeichnend für die Durchgangssysteme ist ihre Anordnung in Reihe zu den Betriebsmitteln der elektrischen Energieverteilung zum Zwecke der Beeinflussung der elektrischen Netzspannung.

Insbesondere sind leistungselektronische Durchgangssysteme in Form von DVR (Dynamic Voltage Restorer) bekannt (Ankit Pandey, Rajlakshmi "Dynamic Voltage Restorer and its Application at LV and MV Level", International Journal of Scientific & Engineering Research, Volume 4, Issue 6, June-2013 ISSN 2229-5518; Oguz Gülcin, "Performance of a Dynamic Voltage Restorer for a Practical Situation",Masterarbeit The Graduate School of Natural and Applied Sciences of Middle East Technical University, December 2004). DVR ist eine leistungselektronische Einrichtung zur Beibehaltung oder Wiederherstellung der Spannungsversorgung einer elektrischen Last, falls die Spannungsversorgung durch Spannungseinbrüche oder Spannungsüberhöhungen gestört ist. Dazu wird der DVR zwischen Elektroenergiesystemen, beispielsweise einer Energiequelle und einer Energiesenke, in Serie angeordnet. Die Hauptfunktion besteht darin, mittels eines Injektionstransformators oder Serientransformators die zur Kompensation notwendige Spannung in Reihe zur Spannungsquelle zum Verbraucher hin immer dann zur Verfügung zu stellen (zu injizieren), wenn ein Spannungseinbruch oder eine Spannungsüberhöhung detektiert wird.

Mit derartigen leistungselektronischen Durchgangssystemen lässt sich das Erfindungskonzept vorteilhaft kombinieren, in dem das Einspeisen in das oder die Elektroenergiesysteme oder in das Energieverteilungsnetz oder eine Stromversorgung über einen Transformator beispielsweise eines DVR realisiert wird. Dadurch lässt sich eine etwaige Einrichtung zur Sicherung und Förderung der Wechselstrom-Netzqualität, beispielsweise DVR, gleichzeitig zur Zurückspeisung von aus der Verzerrungsenergie des Wechselstromnetzes erfindungsgemäß gewonnener Wirkenergie entsprechend der Grundschwingung in das Wechselstromnetz nutzen. Zusätzliche Hardware ist dazu nicht erforderlich.

Ist der Transformator als Injektions- bzw. Serientransformator eines oben beschriebenen DVR angeordnet, der mit der einen Transformatorseite im Wechselstromnetz seriell zwischen einer Quelle und einer Last (jeweilige Elektroenergiesysteme) eingefügt ist, dann lässt sich die Erfindung dahingehend weiterbilden, dass die andere Transformatorseite mit einem gegebenenfalls zweiten Wechselrichter gekoppelt ist, der an den Energiespeicher oder Gleichspannungs- oder Zwischenkreis des Gleichrichters angeschlossen ist. In weiterer Konkretisierung ist der zweite Wechselrichter mit dem Ausgang des zum Gleichrichter gehörigen, ersten Wechselrichters und/oder dem Energiespeicher des Gleichrichters gekoppelt und von der Steuerungs- und/oder Regelungseinrichtung zum Einspeisen von Wirkenergie über den Transformator in das Elektroenergiesystem angesteuert.

Im Rahmen der Erfindung liegt auch ein für aktive Wechselstrom-Oberschwingungs-Filter geeigneter Gleichrichter, der sich dadurch auszeichnet, dass der Gleichspannungskreis derart ausgebildet ist, dass mit ihm wenigstens ein externer, elektrischer Verbraucher oder alternativ oder zusätzlich wenigstens eine interne Gleichrichter-Komponente, jeweils zu deren Energieversorgung, koppel- oder verbindbar ist. Gemäß Erfindung ist am Gleichspannungs- bzw. Zwischenkreis der Eingang eines Gleichspannungswandlers geschaltet ist. Dadurch ist ein Energiefluss von einem zugehörigen Wechselrichter zum Gleichspannungswandler ermöglicht. Der Ausgang des Gleichspannungswandlers ist mit einer oder mehreren technischen Komponenten, Einrichtungen oder Geräten (externe oder dem Wechselrichter interne, elektrische Verbraucher) zu deren elektrischer Strom- bzw. Energieversorgung gekoppelt. Beispielsweise kann der Gleichspannungswandler ausgangsseitig mit Strom- oder Energieversorgungsmitteln der Steuerungs- und/oder Regelungseinrichtung des Gleichrichters, von am Wechselstromnetz angekoppelten Spannungssensoren und/oder von etwaigen sonstigen aktiven Komponenten des Gleichrichters oder auch von externen elektrischen Verbrauchern wie z.B. Beleuchtungseinrichtungen oder elektro-maschinelle Einrichtungen verbunden sein. Die Spannungssensoren bilden Spannungsmessstellen zur Information der Steuerungs- und/oder Regelungseinrichtung über den Zustand der Netzspannung.

Weitere Einzelheiten, Merkmale, Funktionen und Vorteile auf der Basis der Erfindung ergeben sich aus der nachfolgenden Beschreibung optionaler, bevorzugter Ausführungsformen der Erfindung sowie aus den Zeichnungen. Diese zeigen in:

Figur 1 ein Blockdiagramm eines an sich bekannten, geregelten Gleichrichters ohne Neutralleiter zur Verwendung für das erfindungsgemäße Verfahren;

Figur 2 ein Blockdiagramm einer gegenüber Figur 1 abgewandelten Ausführungsvariante des Gleichrichters mit angeschlossenem Neutralleiter zur Verwendung für das erfindungsgemäße Verfahren;

Figur 3 ein Spannungs-Zeit-Diagramm zur Darstellung der realen Netzspannung; und

Figur 4 ein Blockdiagramm einer gegenüber Figur 1 und Figur 2 abgewandelten bzw. erweiterten Ausführungsvariante zum Einsatz des erfindungsgemäßen Verfahrens in einem Drei-Phasen-Wechselstromnetz.

Figur 5 ein Blockdiagramm eines erfindungsspezifischen Gleichrichters für eine Ausführungsvariante der erfindungsgemäßen Gleichrichter-Verwendung.

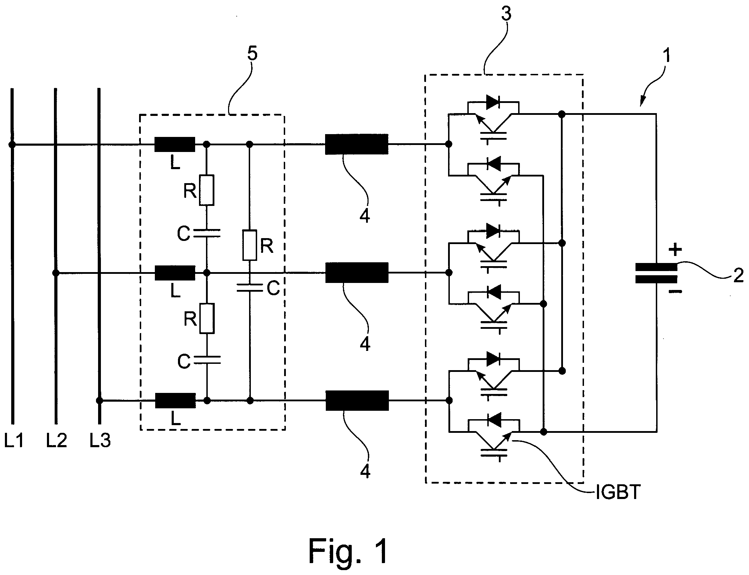

Zur Durchführung des erfindungsgemäßen Verfahrens lässt sich ein an sich bekannter, geregelter Gleichrichter verwenden, wie er in der eingangs genannten Fundstelle auf Seite 130 anhand dort abgebildeter Figur 6.17 beschrieben ist. Der Gleichrichter 1 umfasst gemäß Figur 1 einen Speicherkondensator als Energiespeicher 2, an dessen beiden Verbindungsklemmen ein Wechselrichter 3 angeschlossen ist. Letzterer stellt das Kernstück des geregelten Gleichrichters 1 dar und ist mit sechs Leistungsschaltern in Brückenschaltung, beispielsweise an sich bekannte IGBT-Schalter, realisiert. Denkbar wären auch GTO- oder MOSFET-Schalter oder andere aktiv schaltbare Bauelemente der Leistungselektronik. Mit je einem der drei bidirektionalen Zweige der Brückenschaltung, jeweils bestehend aus je zwei antiparallel geschalteten IGBTs, ist eine Strom- und/oder Speicherdrossel 4 mit einer ersten ihrer beiden Verbindungsklemmen verbunden. Die jeweils andere Verbindungsklemme der drei Speicherdrosseln 4 ist mit einem jeweils zugeordneten Anschluss eines Ausgangsfilters 5 verbunden. Letzteres ist ausgangsseitig über je eine Induktivität L mit den drei Außenleitern L1, L2, L3 eines Wechselstrom-Betriebsnetzes verbunden und umfasst drei RC-Serienschaltungen, welche zwischen je zwei der drei Außenleiter eingefügt sind. Optional kann anstelle der jeweiligen Serienschaltung auch nur eine Kapazität C ohne Widerstand R ausreichend sein. Das Ausgangsfilter 5 ist derart ausgelegt, dass die von den aktiv schaltenden Komponenten bzw. Leistungsschalter IGBT des Wechselrichters 3 ausgehenden Spannungsrippel auf ein für das Netz verträgliches Maß geglättet werden. Durch die Ansteuerung und Kontrolle einer (nicht gezeichneten) Steuerungs- und/oder Regelungseinrichtung, welche für den Wechselrichter 3 Taktmuster generiert, erzeugen die Leistungsschalter IGBT Spannungssignale, welche über die Speicherdrosseln 4 in Ströme für den jeweiligen Außenleiter L1, L2, L3 des Betriebsnetzes bzw. Wechselstromnetzes umgesetzt werden. Ferner sind die Außenleiter L1, L2, L3 mit (nicht gezeichneten) Spannungsmessstellen gekoppelt, welche Momentanwerte der Netzspannung sensieren und ausgangsseitig entsprechende Meßsignale oder Messdaten an die Steuerungs- und/oder Regelungseinrichtung liefern, welche diese für die Ansteuerung der Leistungsschalter bzw. Stromrichterventile IGBT des Wechselrichters 3 innerhalb des Gleichrichters 1 auswertet und verarbeitet.

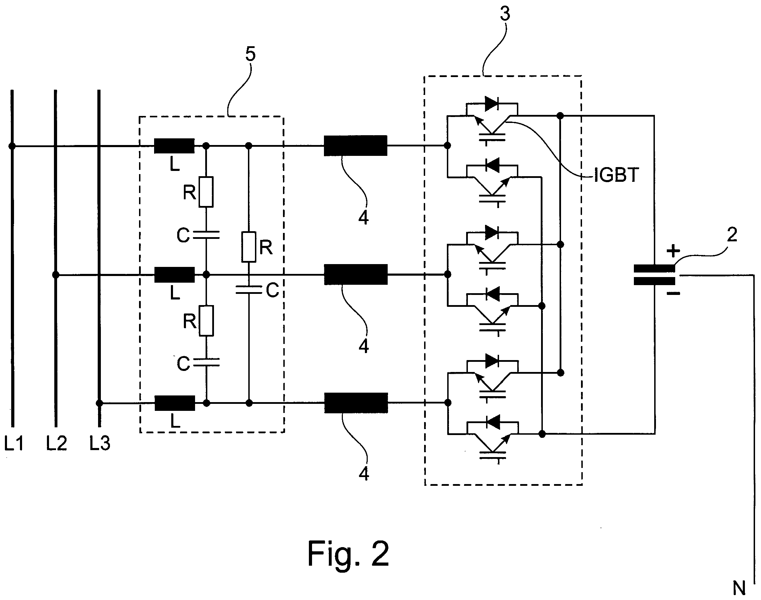

Gemäß Figur 2 lässt sich in Abwandlung der anhand Figur 1 beschriebenen Ausführungsvariante an den Gleichrichter 1 auch ein Neutralleiter N des Wechselstrom-Betriebsnetzes anschließen, vorzugsweise wie an sich bekannt an einem mittleren oder symmetrischen Potenzial des oder der Speicherkondensatoren oder sonstigen Energiespeicher 2. Dies ermöglicht nicht nur die Befilterung von Spannungsverzerrungen zwischen den Außenleiter-Stromphasen L1-L2, L1-L3, L2-L3, sondern auch zwischen je einem der Außenleiter L1, L2, L3 und dem Neutralleiter N. So lässt sich nicht nur die in Spannungsverzerrungen zwischen den Außenleitern, sondern auch zwischen einem der Außenleiter und dem Neutralleiter N enthaltene Verzerrungsenergie aufnehmen und nutzen. Die oben angesprochenen Spannungsmessungen erfolgen hier in prinzipiell gleicher Weise, einschließlich am Neutralleiter N; die Spannungen werden entweder zwischen den drei Phasen bzw. Außenleitern L1, L2, L3 gemessen, oder es wird jeweils die Spannung eines der Außenleiter L1, L2, L3 gegen den Neutralleiter N gemessen. Bei Einschluss des Neutralleiters N lässt sich auch in einem Netz mit einphasigen Verbrauchern arbeiten, in dem einphasige Verbraucher wie z.B. Leuchtmittel in einem Büroraum angeschlossen sind. Ein derartiges, in der Regel einphasiges Leuchtmittel ist mit einem der Außenleiter L1, L2, L3 und mit dem Neutralleiter N verbunden.

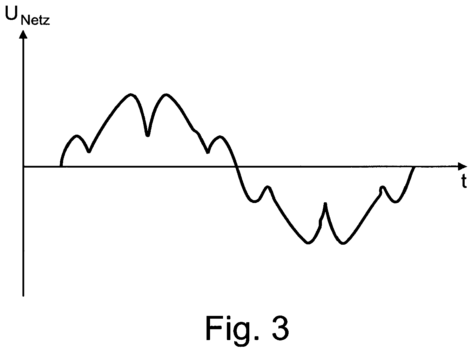

In Figur 3 ist der typische zeitliche Verlauf einer realen bzw. gestörten/verzerrten Netzspannung eines Wechselstromnetzes veranschaulicht. Es kann sich hierbei um eine Spannung zwischen zwei der drei Phasen bzw. Außenleiter L1, L2, L3 als auch zwischen einem der Außenleiter und dem Neutralleiter N handeln.

Die in Figur 3 dargestellte Netzspannung wird kontinuierlich oder quasi-kontinuierlich über die Spannungsmessstellen abgetastet bzw. erfasst, und im Rahmen der Steuerungs- und/oder Regelungseinrichtung wird mit an sich bekannter bzw. verfügbarer Software die erfindungsgemäße Funktionsweise wie folgt ausgeführt:

1) Das oder die gemessenen Spannungssignale oder entsprechenden Messdaten werden (jeweils) in zwei Größen bzw. Signalkomponenten zerlegt: in ein ideales, d.h. sinusförmiges Spannungssignal mit der Netz-Grundsschwingungsfrequenz, beispielsweise 50 Hz, als erste Signalkomponente; und in eine zweite Signalkomponente, welche die verbleibenden, restlichen Signalanteile enthält, also

$$U_{real} = U_{ideal} + U_{Störung}.$$

2) Von der Steuerungs- und/oder Regelungseinrichtung werden die Leistungsschalter IGBT des Wechselrichters 3 derart angesteuert, dass in den Energiespeicher 2 ein Strom aufgenommen wird, der direkt proportional oder in Betrag und Phase proportional zu $U_{Störung}$ bzw. zur Spannungsverzerrung

des Netzes ist.

3) Gleichzeitig wird über eine entsprechende Ansteuerung des Wechselrichters 3 durch die Steuerungs- und/oder Regelungseinrichtung ein Strom zurück in das Wechselstrom-Betriebsnetz L1, L2, L3 gespeist, der direkt proportional zu Uideal ist bzw. in Betrag und Phase mit der Grundschwingungsspannung des Betriebsnetzes korreliert.

Der an sich bekannte Gleichrichter 1 wird also so verwendet, als sei er bezogen auf Störungen im Netz eine (ohmsche) Last oder Stromsenke und bezüglich der Netz-Grundschwingung eine Stromquelle. Folglich ist der erfindungsgemäß betriebenen Gleichrichter anhand der oben spezifizierten Zerlegung bzw. Aufspaltung der Spannungs-Meßsignale in der Lage, im Netz vorhandene Störenergien zu selektieren und aufzusaugen und entsprechend der Netz-Grundschwingung in Wirkenergie umzusetzen und zurückzuspeisen.

Aufgrund der aktuell für die Steuerungs- und/oder Regelungseinrichtung, den Wechselrichter 3 usw. aktuell verfügbaren Baukomponenten und deren übliche Verlustleistungen lässt sich der erfindungsgemäß eingesetzte Wechselrichter so gestalten und unter dem Gesichtspunkt der Energieeffizienz optimieren, dass seine Eigenverluste und der Energieverbrauch für seinen Eigenbetrieb in der Summe kleiner sind als die aus den aufgenommenen Störenergien gewonnene Wirkenergie. Mithin lässt sich mit der Erfindung das Ziel erreichen, ein Gerät bzw. einen Gleichrichter zur Verfügung zu stellen, das bzw. der für seinen Eigenbetrieb weniger verbraucht, als er an Wirkenergie aus der Störenergie gewonnen hat. Der verbleibende Überschuss an Wirkenergie lässt sich vorteilhaft nutzen, sei es durch Zurückspeisen in das Wechselstromnetz L1, L2, L3, N, sei es durch Weiterleiten an andere Elektroenergiesysteme.

In der Praxis könnte sich für den erfindungsgemäßen Einsatz bzw. Verwendungsweise ein geregelter Gleichrichter mit den folgenden Betriebsdaten eignen: Netzspannung - 400 V; Frequenz - 50 Hz; Filterleistung - etwa 300 A; Eingangsleistung aus Spannungsverzerrung - etwa 6 kW; Eigenverluste - weniger als 3 kW; Reaktionsgeschwindigkeit - weniger als 0,1 ms; in der Grundschwingung rückgespeiste Wirkleistung - etwa 3 kW; Energieeinsparung des Endkunden - ca. 0,5 %.

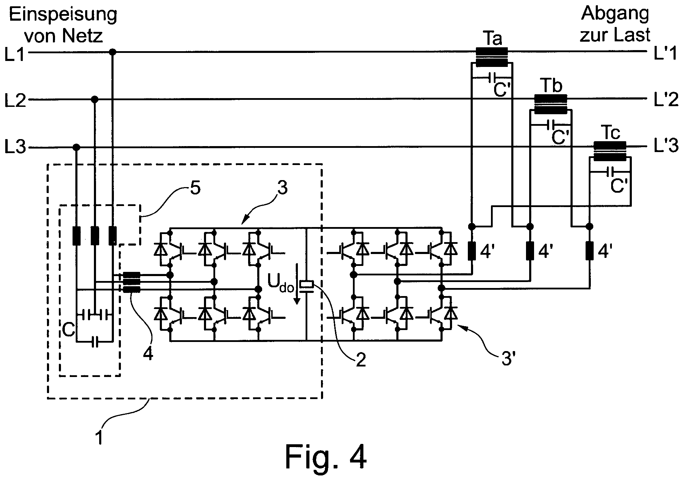

In Figur 4 ist eine an sich bekannte Anordnung eines leistungselektronischen Durchgangssystems in Form eines DVR zum Schutz vor Kurzzeitunterbrechungen und zur Echtzeit-Spannungskorrektur insbesondere bei Spannungseinbrüchen bei einem Dreiphasen-Wechselstromnetz L1, L2, L3 dargestellt. Darin wird der in Figuren 1 und 2 jeweils mit Bezugsziffer 1 markierte Gleichrichter 1 mit gleichartiger Struktur als Eingangsgleichrichter eingesetzt. Wegen dem Schaltungsaufbau wird auf die Ausführungen zu Figuren 1 und 2 verwiesen. Parallel zum dortigen (ersten) Wechselrichter 3 ist an den Energiespeicher 2 ein zweiter Wechselrichter 3' mit sechs Leistungsschaltern, realisiert beispielsweise mit IBGTs, in Brückenschaltung angekoppelt. Auch der zweite Wechselrichter 3' wird von der genannten oder einer anderen Steuerungs- und/oder Regelungseinrichtung kontrolliert, indem die Leistungsschalter mit Taktmustern angesteuert werden. Mit je einem der drei bidirektionalen Zweige der Brückenschaltung ist eine jeweilige Strom- und/oder Speicherdrossel 4' mit einer ersten ihrer beiden Verbindungsklemmen verbunden. Die jeweils andere Verbindungsklemme der drei Speicherdrosseln 4' ist mit den jeweiligen Primärseiten von zwei dreier Serien- bzw. Injektionstransformatoren Ta, Tb, Tc parallel verbunden, welche jeweils einem der drei Außenleiter L1, L2, L3 des Dreiphasen-Wechselstromnetzes zugeordnet sind. Zwischen den beiden jeweiligen Anschlussklemmen der Primärspulen der genannten Transformatoren Ta, Tb, Tc ist eine jeweilige Kapazität C' eingefügt. Die jeweiligen Sekundärseiten der drei genannten Transformatoren Ta, Tb, Tc sind bei je einem der Außenleiter L1, L'1; L2, L'2; L3, L'3 seriell zwischen einer Energiequelle bzw. Netzeinspeisung und einer Last eingefügt.

Zur Wirkungsweise sei folgendes ausgeführt: Entsprechend den obigen Ausführungen zu Figuren 1 - 3 werden von der Steuerung- und/oder Regelungseinrichtung die Leistungsschalter des ersten Wechselrichters 3 so angesteuert, dass erfindungsgemäß ein solcher Strom aus dem Netz aufgenommen wird, der entsprechend der oben genannten zweiten Signalkomponente in Betrag und Phase direkt proportional zur Spannungsverzerrung des Dreiphasen-Wechselstromnetzes ist. Aus dieser Stromaufnahme resultiert erfindungsgemäß ein Laden des Speicherkondensators bzw. Energiespeichers 2 mit Verzerrungsenergie. Dieser wird dann über den zweiten, nachgeschalteten, von der Steuerungs- und/oder Regelungseinrichtung entsprechend angesteuerten Wechselrichter 3' entladen, wenn wie bei einem DVR an sich bekannt ein Spannungseinbruch beispielsweise zwischen zwei der Außenleiter L1, L2, L3 detektiert wird. Erfindungsgemäß wird zur Spannungskorrektur das Entladen strukturiert entsprechend der ersten Signalkomponente, d.h. mit einem Entladestrom durchgeführt, der proportional oder direkt proportional zur Grundschwingungsspannung des Dreiphasen-Wechselstromnetzes ist. Die Steuerungs - und/oder Regelungseinrichtung ist dafür programm- und/oder schaltungstechnisch eingerichtet. Die aus dem Speicherkondensator 2 über den zweiten Wechselrichter generierten Spannungssignale werden über die zweiten Strom- bzw. Speicherdrosseln 4' in Ströme umgesetzt, welche die eine oder mehreren Primärseiten der Serien- bzw. Injektionstransformatoren Ta, Tb, Tc durchsetzen. Die Ströme sind per zweitem Wechselrichter 3' derart angepasst und dimensioniert, dass durch die an die eine oder mehreren Primärseiten elektromagnetisch angekoppelte eine oder mehreren Sekundärseiten der Injektionstransformatoren eine schnelle, rechtzeitige Korrektur der auf den einspeiseseitig bzw. den Einspeise-Außenleitern L1, L2, L3 eingebrochenen Netzspannung erfolgen kann. Unmittelbar nach dem oder den Injektionstransformatoren Ta, Tb, Tc auf den zur Lastseite führenden Außenleitern L'1, L'2, L'3 besitzt der Netz-Spannungsverlauf die vorspezifizierte Amplitude bei nahezu idealem, klirrfreiem Sinus, frei von Verzerrungen. Mit Vorteil ist die dafür notwendige Energie durch die erfindungsgemäße Verfahrensweise aus der im Netz ohnehin enthaltenen Verzerrungsenergie gewonnen und wird entsprechend der Netz-Grundschwingung mit idealem Sinus über den jeweiligen Injektionstransformator zur Spannungskorrektur zurückgespeist.

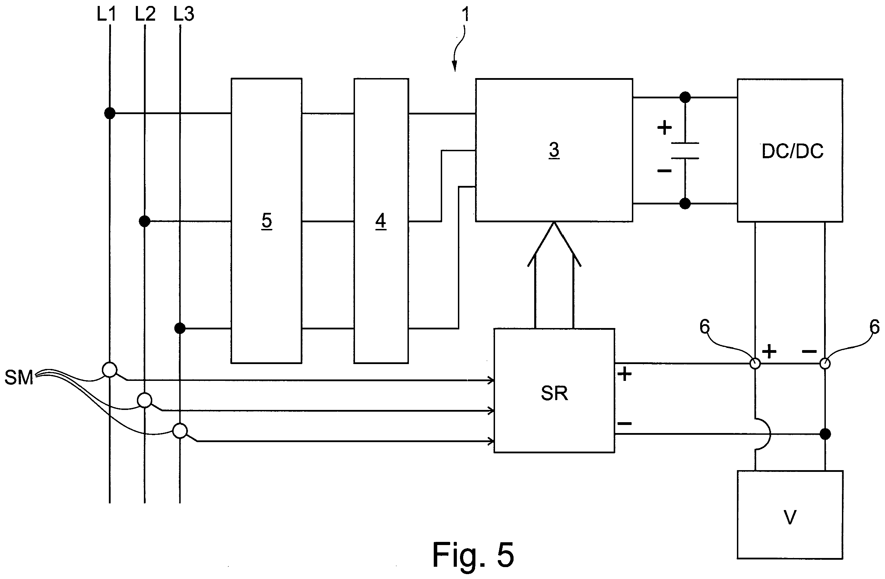

Die Ausführungsform nach Figur 5 unterscheidet sich von denen nach Figuren 1,2 und 4 im Wesentlichen dadurch, dass parallel zum Wechselrichter 3 an den Energiespeicher bzw. Speicherkondensator 2 ein Gleichstromwandler DC/DC (auch DC/DC-Wandler genannt) angeschlossen ist. Dieser wandelt die an seinem Eingang vom Speicherkondensator 2 abgegriffene Gleichspannung in eine andere Gleichspannung um, welche zur Strom- bzw. Energieversorgung beispielsweise der dem Gleichrichter (1) interne Steuerungs- und/oder Regelungseinrichtung SR geeignet ist. So ist Letztere mit ihren Stromversorgungsanschlüssen 6 mit den Ausgangsklemmen des Gleichstromwandlers DC/DC verbunden. Alternativ oder zusätzlich parallel zur Steuerungs- und/oder Regelungseinrichtung SR kann mit den Anschlüssen 6 noch ein weitgehend beliebiger, externer Verbraucher V, beispielsweise Leuchtmittel oder aufladbare Batterie, zu seiner Energieversorgung verbunden sein. Dadurch ist eine gezielte Betätigung der Leistungsschalter des Wechselrichters 3 durch die Steuerungs- und/oder Regelungseinrichtung SR mit den oben angesprochenen, vorspezifizierten Schalt- bzw. Taktmustern ermöglicht, um beliebige Stromsignale und -modulationen zu erzeugen. Alternativ oder zusätzlich lässt sich über den Gleichstromwandler DC/DC in analoger Weise eine Strom- bzw. Energieversorgung intern, das heißt innerhalb des Gleichrichters 1, für die oben genannten Spannungsmessstellen SM generieren, mittels welcher die Phasenspannungen bzw. Außenleiter L1, L2, L3 des Wechselstromnetzes sensiert und und entsprechende Meßsignale oder Messdaten an die Steuerungs- und/oder Regelungseinrichtung SR geliefert werden. Mit der Ausführungsform nach Figur 5 lässt sich der Vorteil erzielen, dass sich die Strom- bzw. Energieversorgung der Steuerungs- und/oder Regelungseinrichtung SR und/oder der Spannungsmessstellen SM ausschließlich aus der Verzerrungsleistung im Wechselstromnetz L1, L2, L3 generieren und zur Verfügung stellen lässt.

Bezugszeichenliste:

    1 - geregelter Gleichrichter

    2 - Speicherkondensator bzw. Energiespeicher
    3 - (erster) Wechselrichter
    3' - zweiter Wechselrichter
    4, 4' - Strom- und/oder Speicherdrossel
    5 - Ausgangsfilter
    6 - Stromversorgungsanschlüsse
    L1,L'1 - Außenleiter
    L2,L'2 - Außenleiter
    L3,L'3 - Außenleiter
    L, L' - Induktivität
    R - Widerstand
    C - Kapazität
    N - Neutralleiter
    DVR - Dynamic Voltage Restorer
    Ta - Serien- bzw. Injektionstransformator
    Tb - Serien- bzw. Injektionstransformator
    Tc - Serien- bzw. Injektionstransformator
    DC/DC - Gleichstromwandler
    SR - Steuerungs- und/oder Regelungseinrichtung
    V - elektrischer Verbraucher
    SM - Spannungsmessstelle

## Patentansprüche

1.    Verfahren zur Nutzung von elektrischer Störungs- und/oder Verzerrungsenergie aus einem insbesondere einer Energieversorgung dienenden Wechselstromnetz (L1, L2, L3), wobei die Störungs- und/oder Verzerrungsenergie in einen Energiespeicher (2) geladen und/oder dort zwischengespeichert wird, und der Energiespeicher (2) entladen wird, wobei die zwischengespeicherte Energie in ein oder mehrere Elektroenergiesysteme, beispielsweise zurück in das Wechselstromnetz (L1, L2, L3) und/oder in einen elektrischen Verbraucher, gespeist wird, **dadurch gekennzeichnet, dass** die im Energiespeicher (2) zwischengespeicherte Energie unter Umwandlung in elektrische Wirkenergie mit folgenden Schritten entladen wird:

    - es werden ein oder mehrere Meßsignale oder Messdaten von einer oder mehreren elektrischen Spannungen (UNetz) des Wechselstromnetzes in eine Steuerungs- und/oder Regelungseinrichtung (SR) aufgenommen,
    - im Zuge ihrer Auswertung und/oder Verarbeitung durch die Steuerungs- und/oder Regelungseinrichtung (SR) werden das oder die Meßsignale oder Messdaten in wenigstens eine erste Signalkomponente, welche ausschließlich oder im Wesentlichen der Grundschwingung und/oder Grundfrequenz im Wechselstromnetz (L1, L2, L3) entsprechende Signalanteile enthält, und eine zweite, die sonstigen Signalanteile enthaltende Signalkomponente zerlegt,
    - mittels der Steuerungs- und/oder Regelungseinrichtung (SR) werden Leistungsschalter (3) eines Wechselrichters (3) derart angesteuert, dass der Energiespeicher (2) mit einem Strom aus dem Wechselstromnetz (L1, L2, L3) geladen wird, der proportional oder direkt proportional zur zweiten Signalkomponente ist,

- und mittels der Steuerungs- und/oder Regelungseinrichtung (SR) werden die Leistungsschalter (3) des Wechselrichters (3) derart angesteuert, dass der Energiespeicher (2) mit einem Strom entladen wird, der proportional oder direkt proportional zur ersten Signalkomponente ist.

2. Verfahren nach Anspruch 1, **dadurch gekennzeichnet, dass** die Umwandlung in Wirkenergie ein den Energiespeicher (2) entladendes Einspeisen eines Stromes umfasst, der in Betrag und Phase der Grundschwingungsspannung des Wechselstromnetzes (L1, L2, L3) entspricht und/oder damit korreliert und/oder dessen Momentanwerte proportional oder direkt proportional zu einer Grundschwingungsspannung des Wechselstromnetzes (L1, L2, L3) sind.

3. Verfahren nach Anspruch 1 oder 2, **dadurch gekennzeichnet, dass** das Laden, Zwischenspeichern und Entladen mit dem jeweiligen Strom in den bzw. aus dem Energiespeicher (2) voneinander entkoppelt und/oder gleichzeitig und/oder zumindest innerhalb einer Periode der Grundschwingung des Wechselstromnetzes (L1, L2, L3) durchgeführt wird.

4. Verfahren nach einem der vorangehenden Ansprüche, **dadurch gekennzeichnet, dass** die Aufspaltung in die erste und zweite Signalkomponente unter Einbeziehung von Vergangenheitsdaten erfolgt, welche früher aufgenommene Meßsignale oder Meßdaten über die Wechselstrom-Netzspannung umfassen, woraus eine Zielvorgabe für die erste Signalkomponente bzw. den ideal sinusförmigen Spannungsverlauf im Wechselstromnetz (L1, L2, L3) gebildet wird.

5. Verwendung eines in aktiven Wechselstrom-Oberschwingungs-Filtern einsetzbaren Gleichrichters (1), insbesondere zur Durchführung des Verfahrens nach einem der vorangehenden Ansprüche, wobei der Gleichrichter (1) einen von einer Steuerungs- und/oder Regelungseinrichtung (SR) ansteuerbaren oder angesteuerten Wechselrichter (3) mit Leistungsschaltern für einen bidirektionalen Strom- und/oder Energiefluss und einen Energiespeicher (2) beispielsweise in Form eines Speicherkondensators aufweist, zur Nutzung von elektrischer Störungs- und/oder Verzerrungsenergie aus einem Wechselstromnetz (L1, L2, L3), wobei diese Energie ganz oder teilweise aus dem Wechselstromnetz (L1, L2, L3) in den Energiespeicher aufgenommen und daraus in ein oder mehrere Elektroenergiesysteme gespeist wird, **dadurch gekennzeichnet, dass** die im Energiespeicher (2) aufgenommene Energie unter Umwandlung in elektrische Wirkenergie entladen wird

, wobei:

    - der Steuerungs- und/oder Regelungseinrichtung (SR) ein oder mehrere Meßsignale von einer oder mehreren elektrischen Spannungen des Wechselstromnetzes (L1, L2, L3) zugeführt werden,

    - und das oder die Meßsignale oder entsprechende, digitale Messdaten in der Steuerungs- und/oder Regelungseinrichtung (SR) dahingehend ausgewertet und/oder verarbeitet werden, dass deren Zerlegung oder Aufspaltung in wenigstens eine erste und eine zweite Signalkomponente erfolgt,

    - wobei die erste Signalkomponente ausschließlich oder im Wesentlichen solche Signalanteile enthält, die der Grundschwingung und/oder Grundfrequenz des Wechselstromnetzes (L1, L2, L3) entsprechen und/oder damit korrelieren,

    - und wobei die zweite Signalkomponente die sonstigen Signalanteile enthält,

    - wobei die Leistungsschalter des Wechselrichters (3) von der Steuerungs- und/oder Regelungseinrichtung derart angesteuert werden, dass ein Strom aus dem Wechselstromnetz (L1, L2, L3) unter Aufladung des Energiespeichers (2) aufgenommen wird, wobei Momentanwerte dieses Stromes direkt proportional zur zweiten Signalkomponente sind, und/oder dieser Strom in Betrag und Phase proportional oder direkt proportional zu einer Spannungsverzerrung oder sonstigen Verzerrungsleistung im Wechselstromnetz (L1, L2, L3) ist,

    - und wobei die Leistungsschalter des Wechselrichters (3) von der Steuerungs- und/oder Regelungseinrichtung (SR) derart angesteuert werden, dass der Energiespeicher mit einem Strom entladen wird, der proportional oder direkt proportional zum Momentanwert der Grundschwingungsspannung und/oder zum Spannungsverlauf der Grundschwingung des Wechselstromnetzes (L1, L2, L3) ist oder wenigstens der Grundschwingung des Wechselstromnetzes (L1, L2, L3) entspricht.

6. Verwendung nach Anspruch 5, wobei der Gleichrichter (1) zur elektrischen Energieversorgung einer oder mehrerer technischer Komponenten, Einrichtungen oder Geräte ausschließlich aus der Verzerrungsleistung eingesetzt wird.

7. Verwendung nach Anspruch 5 oder 6, wobei eine in dem aufgenommenen Strom und/oder im Energiespeicher enthaltene Verzerrungsenergie teilweise zur Stromversorgung und/oder zum Betrieb der Steuerungs- und/oder Regelungseinrichtung, des Wechselrichters (3) und/oder der Energiespeicherquelle (2) verbraucht wird, und noch verbleibende oder verbliebene Verzerrungsenergie in das oder die Elektroenergiesysteme gespeist wird, ohne dass dem Gleichrichter (1) nebst Steuerungs- und/oder Regelungseinrichtung (SR) von extern Strom oder Energie zugeführt wird.

8. Verwendung nach einem der Ansprüche 5 - 7 für ein dreiphasiges Wechselstromnetz mit drei Außenleitern (L1, L2, L3) und gegebenenfalls einem Neutralleiter (N) zur Aufnahme und Nutzung von in Spannungsverzerrungen zwischen den Außenleitern (L1, L2, 3) und/oder einem der Außenleiter und dem Neutralleiter (N) enthaltener Verzerrungsenergie.

9. Verwendung nach Anspruch 8, wobei der Neutralleiter mit einem mittleren Potenzial des Speicherkondensators oder sonstigen Energiespeichers (2) verbunden ist.

10. Verwendung nach einem der Ansprüche 5 - 9, wobei der Gleichrichter (1) als Eingangsgleichrichter in Stromversorgungen maschineller Vorrichtungen des Maschinenbaus oder für Frequenzumrichter elektrischer Antriebe oder als Eingangsgleichrichter für ein oder mehrere, leistungselektronische Durchgangssysteme oder sonstige Einrichtungen zur Sicherung oder Förderung der Qualität des Wechselstromnetzes, beispielsweise DVR (Dynamic Voltage Restorer), angeordnet wird.

11. Verwendung nach einem der Ansprüche 5 - 10, wobei das Einspeisen in das oder die Elektroenergiesysteme über einen Transformator (Ta, Tb, Tc) erfolgt.

12. Verwendung nach Anspruch 11, wobei der Transformator (Ta, Tb, Tc) als Serientransformator oder Injektionstransformator ausgebildet ist, der mit der einen Transformatorseite im Wechselstromnetz (L1, L2, L3; L'1, L'2, L'3) seriell zwischen einer Quelle und einer Last oder zwischen sonstigen Elektroenergiesystemen eingefügt ist und mit der anderen Transformatorseite mit einem gegebenenfalls zweiten Wechselrichter (3') gekoppelt ist, der mit dem Energiespeicher (2) des Gleichrichters (1) gekoppelt ist.

13. Verwendung nach Anspruch 12, wobei der zweite Wechselrichter (3') mit dem ersten Wechselrichter (3) des Gleichrichters (1) und/oder dem Energiespeicher (2) des Gleichrichters (1) gekoppelt ist und von der Steuerungs- und/oder Regelungseinrichtung (SR) zum Einspeisen von Wirkenergie über den Transformator (Ta, Tb, Tc) in das Elektroenergiesystem angesteuert wird.

**Claims**

1. A method for using electrical distortion energy and/or strain energy from an AC mains (L1, L2, L3) serving in particular to supply energy, wherein the distortion and/or strain energy is loaded into an energy store (2) and/or buffered there, and the energy store (2) is discharged, wherein the buffered energy is fed into one or more electrical energy systems, for example back into the AC mains (L1, L2, L3) and/or into an electrical appliance, **characterised in that** the energy buffered in the energy store (2) is discharged, accompanied by conversion into active energy, with the following steps:

   - one or more measurement signals or items of measurement data from one or more electrical voltages (UNetz) of the AC mains are received in a control and regulation system (SR),
   - in the course of evaluation and processing thereof by the control and/or regulation system (SR), the measurement signal(s) or item(s) of measurement data are disassembled into at least one first signal component which contains signal portions corresponding exclusively or substantially to the basic oscillation and/or fundamental frequency in the AC mains (L1, L2, L3), and a second signal component containing the remaining signal portions,
   - circuit breakers (3) of an inverter (3) are actuated by means of the control and/or regulation system (SR) such that the energy store (2) is loaded with a current from the AC mains (L1, L2, L3) which is proportional or directly proportional to the second signal component,
   - and the circuit breakers (3) of the inverter (3) are actuated by means of the control and/or regulation system (SR) such that the energy store (2) is discharged with a current which is proportional or directly proportional to the first signal component.

2. The method according to claim 1, **characterised in that** conversion into active energy comprises supplying a current discharged from the energy store (2) which corresponds and/or is correlated, in amount and phase, to the basic oscillation voltage of the AC mains (L1, L2, L3), and/or the instantaneous values thereof are proportional or directly proportional to a basic oscillation voltage of the AC mains (L1, L2, L3).

3. The method according to claim 1 or 2, **characterised in that** charging, buffering and discharging with the respective current into or out of the energy store (2) is carried out decoupled from one another, and/or simultaneously and/or at least within a period of the basic oscillation of the AC mains (L1, L2, L3).

4. The method according to one of the preceding claims, **characterised in that** the first and second signal components are split by taking into account historical data which comprise earlier received measurement signals or measurement data about the AC mains voltage, from which an objective is set for the first signal component or the ideal sinusoidal voltage characteristic in the AC mains (L1, L2, L3).

5. A use of a rectifier (1) which can inserted into active alternating current harmonic filters, in particular for carrying out the method according to one of the preceding claims, wherein the rectifier (1) has an inverter (3) which can be or is actuated by a control and/or regulation system (SR) with circuit breakers for a bidirectional flow of current and/or energy, and an energy store (2), for example in the form of a storage capacitor, for using electrical disruption and/or strain energy from an AC mains (L1, L2, L3), wherein this energy is received in the energy store completely or partly from the AC mains (L1, L2, L3), and fed from this into one or more electrical energy systems, **characterised in that** the energy received in the energy store (2) is discharged accompanied by conversion into electrical active energy,
   wherein:

   - one or more measurement signals from one or more electrical voltages of the AC mains (L1, L2, L3) are supplied to the control and/or regulation system (SR),
   - and the measurement signal(s) or corresponding digital data are evaluated and/or processed in the control and/or regulation system (SR) to the extent that these are disassembled or split into at least one first and one second signal component,
   - wherein the first signal component contains exclusively or substantially those signal portions which correspond and/or correlate to the basic oscillation and/or fundamental frequency of the AC mains (L1, L2, L3),
   - and wherein the second signal component contains the other signal portions,
   - wherein the circuit breakers of the inverter (3) are actuated by the control and/or regulation system such that a current is received from the AC mains (L1, L2, L3) accompanied by charging of the energy store (2), wherein instantaneous values of this current are directly proportional to the second signal component, and/or this current is proportional or directly proportional, in amount and phase, to a voltage distortion or other distortion power in the AC mains (L1, L2, L3),
   - and wherein the circuit breakers of the inverter (3) are actuated by the control and/or regulation system (SR) such that the energy store is discharged with a current which is proportional or directly proportional to the instantaneous value of the basic oscillation voltage and/or the voltage characteristic of the basic oscillation of the AC mains (L1, L2, L3) or corresponds at least to the basic oscillation of the AC mains (L1, L2, L3).

6. The use according to claim 5, wherein the rectifier (1) is used to supply electrical energy to one or more technical components, devices or appliances, exclusively from the distortion power.

7. The use according to claim 5 or 6, wherein a strain energy contained in the received current and/or in the energy store is used in part to supply current and/or to operate the control and regulation system of the inverter (3) and/or of the energy store source (2), and remaining or unused strain energy is fed into the electrical energy system(s) without the rectifier (1), together with the control and regulation system (SR), being supplied with current or energy.

8. The use according to one of claims 5-7 of a three-phase AC mains with three external conductors (L1, L2, L3) and optionally a neutral conductor (N) for receiving and using strain energy contained in voltage distortions between the external conductors (L1, L2, 3) and/or one of the external conductors and the neutral conductor (N).

9. The use according to claim 8, wherein the neutral conductor is connected to an average voltage of the storage capacitor or other energy store (2).

10. The use according to one of claims 5-9, wherein the rectifier (1) is arranged as an input rectifier in power supplies to machine devices in mechanical engineering, or for frequency inverters of electrical power units or as input rectifiers for one or more electronic power throughput systems or other devices for securing or furthering the quality of the AC mains, for example DVRs (dynamic voltage restorers).

11. The use according to one of claims 5-10, wherein the electrical energy system(s) is (are) supplied via a transformer (Ta, Tb, Tc).

12. The use according to claim 11, wherein the transformer (Ta, Tb, Tc) is designed as serial transformer or injection transformer, which is fitted with the one transformer side in the AC mains (L1, L2, L3; L'1, L'2, L'3) in series between a source and a load or between any electrical energy systems, and with the other transformer side coupled to the optionally second inverter (3') which is coupled to the energy store (2) of the rectifier (1).

13. The use according to claim 12, wherein the second inverter (3') is coupled to the first inverter (3) of the rectifier (1) and/or the energy store (2) of the rectifier (1) and is actuated by the control and/or regulation system (SR) for supplying active energy into the electrical energy system via the transformer (Ta, Tb, Tc).

**Revendications**

1. Procédé pour utiliser l'énergie électrique de perturbation et/ou de distorsion provenant d'un réseau à courant alternatif (L1, L2, L3), qui sert en particulier à une alimentation en énergie, dans lequel l'énergie de perturbation et/ou de distorsion est chargée dans un réservoir d'énergie (2) et/ou y est temporairement stockée, et le réservoir d'énergie (2) est évacué, dans lequel l'énergie temporairement stockée est fournie dans un ou plusieurs systèmes d'énergie électrique, par exemple renvoyée dans le réseau à courant alternatif (L1, L2, L3) et/ou dans une charge électrique, **caractérisé en ce que** l'énergie temporairement stockée dans le réservoir d'énergie (2) est déchargée en la convertissant en énergie électrique active dans les étapes suivantes :

    - un ou plusieurs signaux de mesure ou données de mesure d'une ou plusieurs tensions électriques (UNetz) du réseau à courant alternatif sont enregistrés dans un dispositif de commande et/ou de régulation (SR),
    - au cours de leur exploitation et/ou de leur traitement par le dispositif de commande et/ou de régulation (SR), le ou les signaux de mesure ou les données de mesure sont décomposés en au moins une première composante de signal qui contient des composantes des signaux qui correspondent exclusivement ou essentiellement à l'oscillation fondamentale et/ou à la fréquence fondamentale du réseau à courant alternatif (L1, L2, L3) et une deuxième composante de signal qui contient les autres composantes des signaux,
    - au moyen du dispositif de commande et/ou de régulation (SR), les commutateurs de puissance (3) d'un onduleur (3) sont commandés de telle sorte que l'accumulateur d'énergie (2) est alimenté par un courant provenant du réseau à courant alternatif (L1, L2, L3) qui est proportionnel ou directement proportionnel à la deuxième composante de signal,
    - et au moyen du dispositif de commande et/ou de régulation (SR), les commutateurs de puissance (3) de l'onduleur (3) sont commandés de telle sorte que l'accumulateur d'énergie (2) est déchargé avec un courant proportionnel ou directement proportionnel à la première composante de signal.

2. Procédé selon la revendication 1, **caractérisé en ce que** la conversion en énergie active comprend de décharger le réservoir d'énergie (2) par un courant qui correspond et/ou est en corrélation d'intensité et de phase avec la tension d'oscillation fondamentale du réseau à courant alternatif (L1, L2, L3) et/ou dont les valeurs instantanées sont proportionnelles ou directement proportionnelles à une tension d'oscillation fondamentale du réseau à courant alternatif (L1, L2, L3).

3. Procédé selon la revendication 1 ou 2, **caractérisé en ce que** la charge, le stockage temporaire et la décharge avec le courant correspondant dans ou hors de l'accumulateur d'énergie (2) sont découplés l'un de l'autre et/ou effectués simultanément et/ou au moins pendant une période de l'oscillation fondamentale du réseau à courant alternatif (L1, L2, L3).

4. Procédé selon l'une quelconque des revendications précédentes, **caractérisé en ce que** la subdivision en la première et la seconde composantes de signal s'effectue en incluant des données historiques qui comprennent des signaux de mesure préalablement enregistrés ou des données de mesure via la tension secteur du réseau à courant alternatif, à partir desquelles est formé un objectif pour la première composante de signal ou pour la caractéristique de tension sinusoïdale idéale dans le réseau à courant alternatif (L1, L2, L3).

5. Utilisation d'un redresseur (1) utilisable dans des filtres harmoniques actifs à courant alternatif, en particulier pour la mise en oeuvre du procédé selon l'une des revendications précédentes, dans laquelle le redresseur (1) comporte un onduleur (3) avec des commutateurs de puissance qui peuvent être pilotés ou qui sont pilotés par un dispositif de commande et/ou de régulation (SR) pour un courant et/ou un flux énergétique bidirectionnel, et comporte un réservoir d'énergie (2), par exemple sous forme de condensateurs de stockage, pour l'utilisation d'énergie électrique de perturbation et/ou de distorsion provenant d'un réseau à courant alternatif (L1, L2, L3), dans laquelle cette énergie est absorbée totalement ou partiellement à partir du réseau à courant alternatif (L1, L2, L3) dans le réservoir d'énergie et est amenée dans un ou plusieurs systèmes d'énergie électrique, **caractérisée en ce que** l'énergie dans le réservoir d'énergie (2) est déchargée en la convertissant en énergie électrique active, dans laquelle :

- un ou plusieurs signaux de mesure d'une ou plusieurs tensions électriques du réseau à courant alternatif (L1, L2, L3) sont transmis au dispositif de commande et/ou de régulation (SR),

- et le ou les signaux de mesure ou les données de mesure numériques correspondantes sont exploités et/ou traités dans le dispositif de commande et/ou de régulation (SR) de telle sorte que se produise leur décomposition ou leur division en au moins une première et une seconde composantes de signal,

- dans laquelle la première composante de signal contient exclusivement ou sensiblement de telles composantes des signaux qui correspondent et/ou sont corrélées à l'oscillation fondamentale et/ou à la fréquence fondamentale du réseau à courant alternatif (L1, L2, L3),

- et dans laquelle la deuxième composante de signal contient les autres composantes des signaux,

- dans laquelle les commutateurs de puissance de l'onduleur (3) sont pilotés par le dispositif de commande et/ou de régulation de telle sorte qu'un courant est tiré du réseau à courant alternatif (L1, L2, L3) en chargeant le réservoir d'énergie (2), les valeurs instantanées de ce courant étant directement proportionnelles à la deuxième composante de signal, et/ou ce courant est proportionnel ou directement proportionnel à une distorsion de tension ou autre distorsion de puissance dans le réseau à courant alternatif (L1, L2, L3),

- et dans laquelle les commutateurs de puissance de l'onduleur sont pilotés par le dispositif de commande et/ou de régulation (SR) de telle sorte que l'accumulateur d'énergie soit déchargé avec un courant proportionnel ou directement proportionnel à la valeur instantanée de la tension oscillatoire fondamentale et/ou à la courbe de tension de l'oscillation fondamentale du réseau à courant alternatif (L1, L2, L3) ou au moins correspondant à l'oscillation fondamentale du réseau à courant alternatif (L1, L2, L3).

6. Utilisation selon la revendication 5, dans laquelle le redresseur (1) est utilisé pour l'alimentation électrique d'un ou plusieurs composants techniques, dispositifs ou appareils exclusivement à partir de la puissance de distorsion.

7. Utilisation selon la revendication 5 ou 6, dans laquelle une énergie de distorsion contenue dans le courant absorbé et/ou dans le dispositif de stockage d'énergie est partiellement consommée pour l'alimentation en énergie et/ou pour le fonctionnement du dispositif de commande et/ou de régulation, de l'onduleur (3) et/ou de la source de stockage d'énergie (2), et l'énergie de distorsion restante ou résiduelle est amenée dans le ou les systèmes d'énergie électrique sans que le redresseur (1) et le dispositif de commande et/ou de régulation (SR) soient alimentés en énergie ou courant depuis l'extérieur.

8. Utilisation selon l'une quelconque des revendications 5 à 7 pour un réseau triphasé à courant alternatif ayant trois conducteurs extérieurs (L1, L2, L3) et éventuellement un conducteur neutre (N) pour recevoir et utiliser l'énergie de distorsion contenue dans les distorsions de tension entre les conducteurs extérieurs (L1, L2, L3) et/ou un des conducteurs extérieurs et le conducteur neutre (N).

9. Utilisation selon la revendication 8, dans laquelle le conducteur neutre est relié à un potentiel moyen du condensateur de stockage ou d'un autre dispositif de stockage d'énergie (2).

10. Utilisation selon l'une quelconque des revendications 5 à 9, dans laquelle le redresseur (1) est agencé comme redresseur d'entrée dans des alimentations d'appareils mécaniques de construction mécanique ou pour des convertisseurs de fréquence d'entraînements électriques ou comme redresseur d'entrée pour un ou plusieurs systèmes électroniques de puissance ou autres dispositifs pour sécuriser ou promouvoir la qualité du réseau en courant alternatif, par exemple un DVR (Restaurateur Dynamique de Tension).

11. Utilisation selon l'une quelconque des revendications 5 à 10, dans laquelle l'énergie électrique est amenée dans le ou les systèmes d'énergie électrique via un transformateur (Ta, Tb, Tc).

12. Utilisation selon la revendication 11, dans laquelle le transformateur (Ta, Tb, Tc) est conçu sous la forme d'un transformateur en série ou d'un transformateur d'injection qui est inséré avec un côté de transformateur dans le réseau à courant alternatif (L1, L2, L3 ; L'1, L'2, L'3) en série entre une source et une charge ou entre d'autres systèmes d'énergie électrique et est couplé si besoin est selon l'autre côté de transformateur à un deuxième onduleur (3') qui est couplé au réservoir (2) du redresseur (1).

13. Utilisation selon la revendication 12, dans laquelle le deuxième onduleur (3') est couplé au premier onduleur (3) du redresseur (1) et/ou au réservoir d'énergie (2) du redresseur (1) et est piloté par le dispositif de commande et/ou de régulation (SR) pour alimenter le système d'énergie électrique en énergie active via le transformateur (Ta, Tb, Tc).

Fig. 1

Fig. 2

$U_{Netz}$

Fig. 3

## Fig. 4

Fig. 5

EP 3 118 961 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03026094 A1
- WO 2013077801 A
- WO 2012025660 A1


**In der Beschreibung aufgeführte Nicht-Patentliteratur**

- **GROßE-GEHLING.** Blindleistungskompensation - Netzqualität. VDE-Verlag, 2009, 130
- **ANKIT PANDEY ; RAJLAKSHMI.** Dynamic Voltage Restorer and its Application at LV and MV Level. *International Journal of Scientific & Engineering Research,* Juni 2013, vol. 4 (6), 2229-5518
- Performance of a Dynamic Voltage Restorer for a Practical Situation. **OGUZ GÜLCIN.** Masterarbeit The Graduate School of Natural and Applied Sciences. Middle East Technical University, Dezember 2004